**Europäisches Patentamt**

**European Patent Office**

**Office européen des brevets**

(11) Veröffentlichungsnummer: **0 127 844**

**A1**

(12) ## EUROPÄISCHE PATENTANMELDUNG

(21) Anmeldenummer: **84105867.0**

(22) Anmeldetag: **23.05.84**

(51) Int. Cl.³: **G 05 B 19/04**
**G 04 G 15/00**

(30) Priorität: **31.05.83 DD 251563**

(43) Veröffentlichungstag der Anmeldung:
**12.12.84 Patentblatt 84/50**

(84) Benannte Vertragsstaaten:
**AT CH DE FR GB LI**

(71) Anmelder: **VEB Werk Für Fernsehelektronik im VEB Kombinat Mikroelektronik**
**Ostendstrasse 1/14**
**DDR-1160 Berlin-Oberschöneweide(DD)**

(72) Erfinder: **Waldmann, Jürgen**
**Lange Strasse 86**
**DD-1017 Berlin(DD)**

(72) Erfinder: **Hoffmann, Thomas**
**Alfred Randt-Strasse 11**
**DD-1170 Berlin(DD)**

(74) Vertreter: **Eschmann, Heinz et al,**
**A. Braun, Braun, Héritier, Eschmann AG Patentanwälte**
**Holbeinstrasse 36-38**
**CH-4051 Basel(CH)**

(54) **Hybridintegriertes programmierbares Schaltmodul.**

(57) Mit diesem Schaltmodul, das in der Steuer- und Regelungstechnik sowie in der Haushaltselektronik Anwendung findet, können Zeit-, Anzeige- und Steuerfunktionen realisiert werden.

Auf einer Leiterplatte (1) ist ein Schaltkreis (2) mit Mikrorechnerstrukturen angeordnet, der als Programm- und Funktionsspeicher integrierte RAM- und ROM-Strukturen enthält. Die Zeit und beliebige andere Zustände können über eine Anzeige (3) angezeigt werden. Die Steuerfunktionen übernimmt ein endloses Schieberegister (4), in das bitweise die Information für einen Ein- oder Ausschaltvorgang eingegeben wird. Dem Schieberegister (4) sind stromtreibende Latch-Register (5) nachgeschaltet, die die Information bis zum gewünschten Zeitpunkt speichern. Das Schieberegister (4) ist so gestaltet, dass es beliebig erweitert werden kann, so dass eine Vielzahl externer Systeme, beispielsweise durch An- oder Abschaltung, von der Versorgungs-spannung steuerbar sind. Die universelle Anwendbarkeit wird durch nach aussen geführte Steueranschlüsse (6, 7) gewährleistet.

EP 0 127 844 A1

Hybridintegriertes programmierbares Schaltmodul

Die Erfindung betrifft eine Anordnung, die Zeit-, Anzeige- und Steuerfunktionen realisiert und in der Steuer- und Regelungstechnik sowie in der Haushaltselektronik Anwendung findet.

Bekannt sind höchstintegrierte Schaltkreise, die in Kombination mit Flüssigkristallanzeigen, Quarz- und Stellgliedern vollelektronische digitale Uhrenfunktionen ermöglichen.

Dabei wird auf eine geringe Verlustleistung orientiert, um die Anordnung lange Zeit mit integrierten Energiequellen zu betreiben.

Diese Systeme bedürfen einer hohen technisch-technologischen Entwicklungskapazität und sind für spezielle Kundenwünsche zugeschnitten. Steuer- und Schaltfunktionen sind mit diesen Systemen nicht realisierbar.

Die DE-OS 3028358 beschreibt eine elektronische Uhr mit Alarmeinrichtung bekannt, die neben verschiedensten Uhren- und Datumsfunktionen Register zur Speicherung von voreinstellbaren Zeitpunkten für eine Alarmauslösung und weitere Register zur Speicherung einer vorgegebenen Dauer einer Vorbereitungsperiode sowie Rechenregister zur Berechnung des Voralarmzeitpunktes enthält. Mit der Uhrenfunktion wird somit eine Rechenfunktion verknüpft. Jedoch wäre es wünschenswert die Rechenabläufe variabel zu gestalten, um andere Programme ablaufen zu lassen.

Dieser Vorteil liegt der bekannten DE-OS 3026128 zugrunde, wo eine Schaltuhr mit Mikroprozessor beschrieben wird, die durch eine Anzahl getrennt auf Folgen von Tagesschaltprogrammen programmierbare Schaltkreise gekennzeichnet wird.

Als Nachteil dieser Anordnung muß das schlechte Verhältnis von Software und Maskenentwicklung zur steuerbaren externen Hardware betrachtet werden.

Vielfach bekannt sind auch Uhrenschaltkreise (beispielsweise National Semiconductor MM 5402 IMM 53108), die am Netz betrieben werden und ihre Zeitbasis (50 oder 60 Hz) davon ableiten, Anzeigen mit höherer Verlustleistung, beispielsweise Lichtemitterdioden, Digitron, anzusteuern und einen Ein- oder Ausschaltvorgang zu steuern.

Die Firma Toshiba stellt in der Elektronik 1978/27/2 S. 31 ein Uhrenschaltkreiskonzept auf Basis einer weiterentwickelten $I^2L$-Technologie vor, das den Vorteil der Höchstintegration mit leistungstreibenden Ausgangsstufen kombiniert, wodurch LED-Großuhren direkt ansteuerbar sind.

Jedoch ist diese Technologie sehr schwierig zu beherrschen, sodaß nur eine niedrige Ausbeute erreicht wird. Als schwierig erweist sich die Abführung der auf engsten Raum umgesetzten Verlustleistung, wodurch es zu einer Einschränkung des Temperaturbereiches der Einsatzklasse und der Zuverlässigkeit kommt.

Ziel der Erfindung ist es, eine günstige Verknüpfung von Zeit-, Anzeige- und Steuerfunktionen für ein komplexes hybrides Bauelement zu finden.

Der Erfindung liegt die Aufgabe zugrunde, durch eine entsprechende Konstruktion und Schaltungsanordnung vielfach variable Funktionen in einem komplexen hybriden Bauelement unterzubringen, die durch Maskenprogrammierung im Herstellungsprozeß oder durch problemorientierte Programmierung beim Anwender eingestellt werden.

Dabei darf die Hardware oder die konstruktive Gestaltung der Verdrahtung sich nicht oder nur geringfügig ändern, um eine anwendungsoffene Fertigung in großen Stückzahlen abzusichern.

Erfindungsgemäß wird die Aufgabe dadurch gelöst, daß sämtliche Steuerfunktionen der hybriden Anordnung von einem höchstintegrierten Schaltkreis mit Mikrorechnerstruktur vorgenommen werden. Diese komplexe Struktur wird dadurch erreicht, daß an die Schnittstelle zum frei programmierbaren System wo variable Programme und Steuerfunktionen ablaufen, ein endloses Schieberegister angeschlossen ist, das bei entsprechender Programmierung mit zeit- und/oder prozeßabhängigen Steuerbefehlen geladen wird.

Dem Schieberegister sind stromtreibende Latch-Register nachgeschaltet, die die Information bis zum gewünschten Zeitpunkt speichern. Da das Schieberegister so gestaltet ist, daß es beliebig erweitert werden kann, sind von dem komplexen hybriden Bauelement aus auch beliebig viele Systeme steuerbar, beispielsweise durch Anschalten oder Abschalten von der Versorgungsspannung.

Die Latch-Register sind so aufgebaut, daß Halbleistungsschalter oder Relais direkt ansteuerbar sind.

Dadurch wird zusätzlicher externer Schaltungsaufwand versieden.

Desweiteren werden von dem endlosen Schieberegister aus auch Eingabeoperationen in das freiprogrammierbare System vorgenommen.

Auf diese Weise ist das hybride programmierbare Schaltmodul an keinen starren Programmablauf gebunden und wird zu beliebigen Zeitpunkten von außen gestoppt oder mit einem aktualisierten problemorientierten Programmablauf beeinflußt.

Unabhängig davon sind ausbaufähige integrierte RAM- und ROM-Strukturen enthalten, die maskenprogrammierte und flüchtige Daten und Steuerbefehle verarbeiten.

Der freiprogrammierbare Teil des hybridintegrierten Schaltmoduls ist so ausgebildet, daß von den Steuerfunktionen unbeeinflußt ein Frequenzteiler aus einer stabilisierten Quarzfrequenz die Zeitbasis für eine Uhrenfunktion ableitet.

Für den Zeitpunkt, bei dem Zählregister für die Anzeige der Uhrzeit gefüllt werden, ist der Programmablauf kurzzeitig unterbrochen.

Dabei werden die Zählregister mit Schaltstufen verknüpft, die LCD-Anzeigen direkt oder LED-Anzeigen über Interfacestufen ansteuern.

Die Erfindung wird nachstehend an einem Ausführungsbeispiel erläutert.

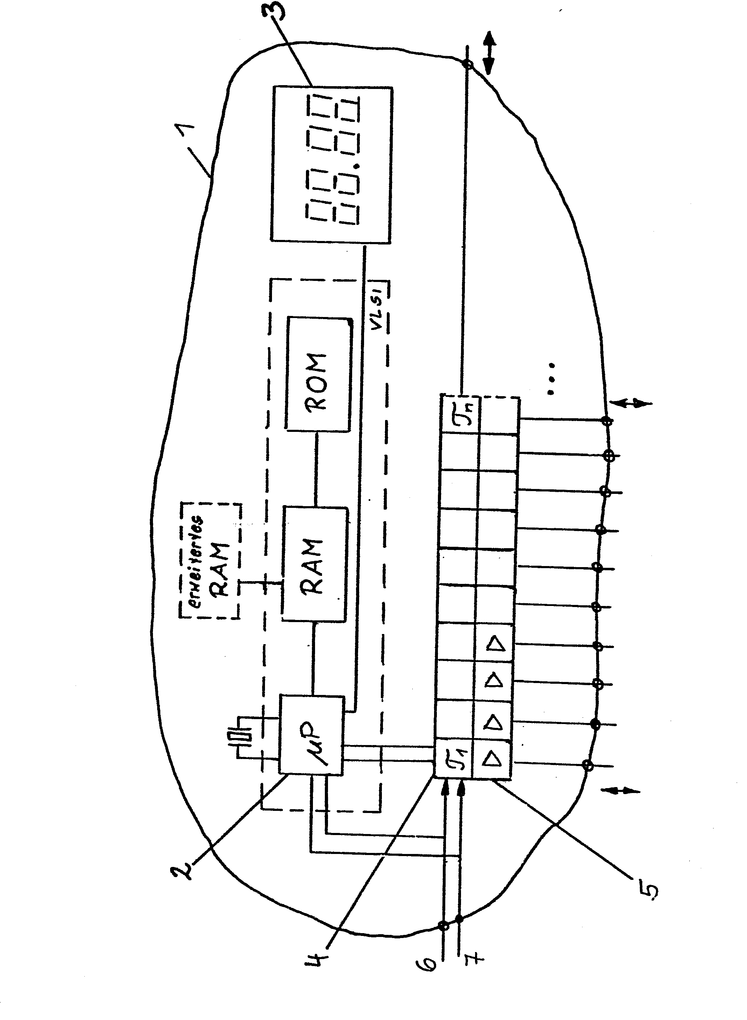

Die einzige Figur der Zeichnung stellt ein hybridintegriertes Schaltmodul dar.

Alle komplexen Baugruppen werden dabei als Chip auf einer durchkontaktierten Leiterplatte 1 in Mikroelektronik montiert. Die Steuerfunktionen übernimmt ein höchstintegrierter Schaltkreis 2 mit Mikrorechnerstruktur. Der Schaltkreis wird durch einen Quarz und durch Anlegen der Betriebsspannung in Funktion gebracht.

Der Schaltkreis enthält als Programm- und Funktionsspeicher integrierte RAM- und ROM-Strukturen.

Über bidirektionale Tore erfolgt die Verbindung mit hybrid integrierten Ein/Ausgabestrukturen. Über eine Anzeige 3 als LCD-Struktur oder mit zwischengeschaltetem Interface als LED-Anzeige können die Zeit und beliebig andere Zustände angezeigt werden. Für die Steuerfunktionen wird an die Ausgabetore des Schaltkreises ein Schieberegister 4 angeschlossen, in das bitweise die Information für einen Ein- oder Ausschaltvorgang für ein Gerät oder ein externes System eingegeben wird.

Aus dem Schieberegister 4 wird die Information parallel in Latch-Register 5 übernommen, die z. B. am Ausgang Halbleiterleistungsschalter oder Relais direkt ansteuern.

Wichtig für eine universelle Anwendbarkeit des hybridintegrierten programmierbaren Schaltmoduls sind die nach außen geführten Steueranschlüsse 6 und 7. Mit ihrer Belegung wird wahlweise die Eingabe oder Ausgabe für das frei programmierbare System festgelegt.

Weiterhin wird bestimmt, ob die Ein/Ausgabe seriell oder parallel über die Latch-Register erfolgt.

Damit ist es möglich, Prozesse nach vorbestimmten Programmen ablaufen zu lassen, wie auch auf veränderte Bedingungen durch eine prozeßbezogene Eingabe des Steuerprogramm zu variieren.

Patentansprüche

1. Hybridintegriertes programmierbares Schaltmodul, bei dem Zeit-, Anzeige- und Steuerfunktionen auf einem einheitlichen Träger frei programmierbar zusammenwirken, dadurch gekennzeichnet, daß an die Schnittstelle zum frei programmierbaren System ein endloses Schieberegister angeschlossen ist, das in stromtreibende Latch-Register je nach Programmierung zeit- und/oder prozeßabhängig Steuerbefehle für beliebig viele zu- oder abzuschaltende Systeme einspeichert.

2. Hybridintegriertes programmierbares Schaltmodul nach Punkt 1, gekennzeichnet dadurch, daß die Schnittstelle zum frei programmierbaren System wenigstens einen extern zugänglichen Steuereingang zur Negierung der Schieberichtung aufweist und über eine externe Gatterschaltung zeit- und/oder prozeßabhängig auf Befehlseingabe in das hybridintegrierte programmierbare Schaltmodul umgeschaltet wird.

3. Hybridintegriertes programmierbares Schaltmodul nach Punkt 1 und 2, gekennzeichnet dadurch, daß die Schnittstelle zum frei programmierbaren System einen weiteren Steuereingang aufweist, dessen Kodierung Paralleleingabe oder serielle Eingabe von Steuerwerten zur Verarbeitung im Programmablauf des hybridintegrierten programmierbaren Schaltmoduls festlegt.

E

erweitertes RAM

μP

RAM

ROM

VLSI

$T_1$    $T_n$

...

0127844

**Europäisches Patentamt**

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | FR-A-2 371 005 (J. GRALL) <br> * Seiten 1,2; Figuren * | 1 | G 05 B 19/04 <br> G 04 G 15/00 |
| A | | 2,3 | |
| | --- | | |
| X | WESCON TECHNICAL PAPERS, Band 19, Nr. 19, 1975, Seiten 24/1 1-6, North Hollywood, US; P. MITZEN: "The microprocessor and its interfaces" <br> * Seite 5, linke Spalte, letzter Abschnitt - rechte spalte, zweiter Abschnitt; Figur 6 * | 1 | |
| A | IDEM | 2,3 | |
| | --- | | RECHERCHIERTE SACHGEBIETE (Int Cl. ³) |
| A | US-A-4 125 993 (P. EMILE) | 1-3 | |
| | --- | | |
| A | FR-A-1 555 755 (LE MATERIEL TELEPHONIQUE) | 1-3 | G 05 B <br> G 04 G |
| | ----- | | |

Der vorliegende Recherchenbericht wurde für alle Patentansprüche erstellt.

| Recherchenort <br> DEN HAAG | Abschlußdatum der Recherche <br> 10-09-1984 | Prüfer <br> EXELMANS U.G.J.R. |
|---|---|---|